# EUROPEAN PATENT SPECIFICATION

(11) **EP 2 109 254 B1**
(45) Date of publication and mention of the grant of the patent: **01.02.2012**
(21) Application number: 08154216.9
(22) Date of filing: 08.04.2008
(51) Int. Cl.: H04L 12/24

(54) **Configuration server for managed elements in a telecommunications system**
Konfigurationsserver für verwaltete Elemente in einem Telekommunikationssystem
Serveur configuré pour éléments gérés dans un système de télécommunications

(43) Date of publication of application: 14.10.2009
(73) Proprietor: Tieto Oyj, 00441 Helsinki (FI)
(72) Inventor: Stenberg, Kristina, 931 35, SKELLEFTEÅ (SE); Vestin, Magnus, 932 37, URSVIKEN (SE); Lundmark, Torbjörn, 932 35, URSVIKEN (SE)
(74) Representative: Kitzler, Michael

(56) References cited:
- US-A1- 2003 208 579
- US-A1- 2005 174 994

## Description

### Field of the Invention

The present invention pertains generally to the field of telecommunications system and more specifically to architecture for the configuration management of centrally managed network elements such as radio base stations.

### Background

Base stations and other network elements of a mobile telecommunications system that is centrally managed from a network management system need specific configurations of hardware and software. The configurations may vary for example dependent on the specific operating conditions for each network element and must usually be updated from time to time.

The configuration of a network element is commonly defined in a configuration file where values or states of a number of configuration parameters are specified. The configuration file is stored in the network element, and the network element is devised to set the various parameters for hardware and software comprised in the network element dependent on the specifications in the configuration file.

The configuration of a network element is normally updated by downloading a new or updated configuration file from the network management system to the network element, and thereafter executing any specified changes in the parameter settings of the network element. The process for configuration of the network element via a configuration file from the network management system is a subject for standardization and is defined as a configuration session in a similar manner for example in the standards 3GGP and netconf (RFC 4741), which are currently found on the Internet web pages http://www.3gpp.org/ftp/Specs/html-info/32612.htm) and for netconf (RFC 4741) ftp://ftp.rfc-editor.org/in-notes/rfc4741.txt, respectively. According to these standards, the configuration update is controlled via the network management system in a series of phases and commands that have to be executed in a specified order.

The phases and commands that have to be executed in a configuration session involve an initiation phase, a download phase, a validation phase, an activation phase and a possible roll back phase. The initiation phase is normally designed to prepare the network management system and the network element for changing the configuration and involves blocking communication and functionality from the network element e.g. in order not to change the conditions during the configuration session. The configuration session may extend over a quite considerable period of time during which the network element is out of order for other practical purposes than the configuration procedure. Controlling all the activities in the configuration session requires either a substantial manual activity to support the process or an advanced automatic control system that can handle all steps and possible outcomes that may entail a need for adjustment of the procedure. In any case, the network management system will be heavily occupied with the communication with the network element during the configuration procedure.

The configuration updating procedure according to the standards causes a high degree of dependency between the network management system and the network element, because the network management system has to be involved during the whole updating procedure. Furthermore, in the thus known updating process there is no definition of how the managed network element shall act in cases of errors or other unexpected events. The configuration updating process involves a large amount of communication between the network management system and the network element. When the configuration of the whole system or even just a part of the system is updated, this causes congestion and the network management system is a bottleneck for the overall management of the system.

There is therefore a need for an improved configuration updating process.

### Related Art

Further related art is for example found in the patent document W09916274, which discloses a central network management system in the shape of a merged operations and maintenance centre for managing a telecommunications system. The network management system comprises a configuration management server as an integral part of the network management system. Communications between the network element and the configuration server involves the network management system.

Document US20030208579 A1 also discloses related prior art and discloses a method for updating software configurations of line-replaceable unit (LRU) computers (networks entities) in a restricted architecture network. The LRU independently creates an individual configuration file that identifies current software components. Each LRU transmits its configuration file to a configuration server. The configuration server updates a system configuration data file with the configuration files from the LRU's. A download server sends a list of desired software components to the LRU's. Each of the LRU's independently and simultaneously download the needed software from the download server.
Document US20050174994 A1 discloses a system for automatically upgrading the firmware of network entities in the form of internet video phones (IP-phones) and a method of managing the system using an upgrade server and a method wherein the IP-phone requests firmware and a TFT/HTTP server transmits firmware after receiving an upgrade message.

### Object of the invention

The object of the present invention is to provide a solution to the problem of inflexibility in the configuration updating procedure of a base station in a telecommunications system.

### Summary of the invention

In accordance with the invention the problem is solved by detaching the configuration updating process from the network management system. The updated configuration is defined and triggered in the network management system, whereas the actual configuration updating process is controlled by the network element and communication of configuration data is performed in communication between the network element and a configuration server. The network element performs the steps to enable the functions of the network element to operate in accordance with an updated configuration and sends notification messages to the network management system when the configuration updating is completed, and possibly also at predetermined stages or conditions during the updating process.

According to an aspect of the inventive concept configuration update files are generated in the network management system and are stored in the configuration server. The configuration update files comprise a configuration update instruction file and a configuration file. The configuration files constitute a definition of an updated configuration for a selected network element, and is divided into an instruction file that defines instructions and control parameters for the network element to execute to perform the updating process, whereas the configuration file comprises the values and/or states of selected configuration parameters for the different components or functions of the network element.

The configuration update files are downloaded from the configuration server to the network element and the downloading is performed in response to a configuration update command communicated from the network management system to the network element. The downloading and the whole configuration updating process is controlled by a configuration updating control function of the network element.

In the configuration updating process, the downloading of the configuration update files is preferably divided into two separate phases as parts of the configuration updating process. In the first phase the configuration update instruction file is downloaded and interpreted by the configuration updating control function of the network element, whereas in the second phase the configuration file is downloaded dependent on the instructions in the configuration update instruction file.

Updated configuration parameters are then set dependent on the configuration file and its content. Thereafter, dependent on conditions defined in the configuration instruction file, the operation of the network element and its functions and components is switched to operate dependent on the updated configuration parameters.

Status notification messages are sent from the network element to target units, typically the network management system and possibly the configuration server dependent on specifications of targets and predetermined conditions specified in the configuration update instruction file. For example, status notification messages are sent at different defined stages during the updating process, or in response to specific predicted or unpredicted events, and when the updating is completed and the network element operates according to the updated configuration.

Effects of the invention are that the network management system is relieved from the load of performing the configuration updating process and the configuration updating process can be made more flexible e.g. in process flow or timing.

### Brief description of the drawings

The invention will be further explained with reference to the enclosed drawings, wherein:
Fig 1 shows a schematic overview of the structure of a telecommunications system in which the invention is typically deployed;
Fig 2 shows schematically an embodiment of the invention with an example of a network element in more detail;
Fig 3 shows a flow chart of the method for configuration management in accordance with the invention;
Fig 4 shows schematically a communication chart illustrating the sequence of steps and communications between different units in a configuration session according to an embodiment of the invention.

### Description of Embodiment

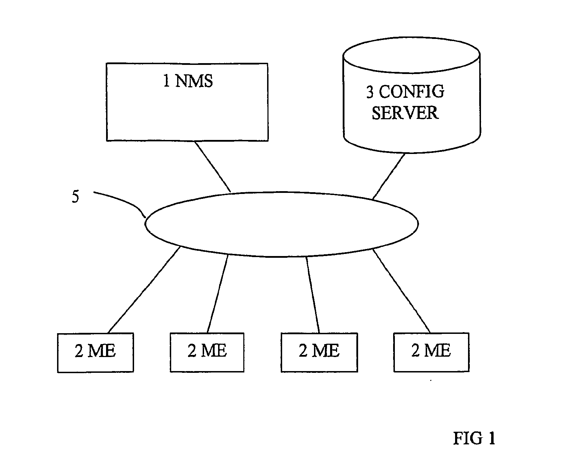

The present invention of configuration management is typically applied in a radio based or landline based telecommunications system 1 schematically illustrated in Fig 1.

In Fig 1 a central network management system NMS 1 is communicatively coupled via a data communications network 5 to a plurality of a managed network elements ME, for example in the shape of mobile telephone base stations 2, as exemplified herein, or in the shape of a router. Each base station 2 is provided with functional components in the shape of computer based hardware and other electronic hardware as well as computer program software designed to realise the different per se known functions of a telecommunications base station. In a typical telecommunications system there may be a large number of managed elements for example in the range up to about 200 telecommunications base stations. The managed elements are preferably communicatively coupled to the network management system via an internet protocol communications network.

The network management system 1 is configured to administer and monitor the network of managed network elements 2 with regard to different aspects such as fault management, performance management, security management and configuration management. The Performance management is concerned with the operability and the characteristics of the network element, e.g. whether there is full functionality or something is out of order or does not operate with full capacity. The security management is concerned with physical as well as communicative security aspects in relation to the network element. Configuration management is concerned with the specific setup of various parameters for the hardware and software components of the network elements, and is thus the subject for the present invention. For this purpose and in accordance with the inventive concept a configuration server 3 is also communicatively coupled to the network management system 1 and the managed network elements 2 via the data communications network. The configuration server is preferably logically separated from the network management system but may not necessarily be physically separated. Different such system configurations are conceivable within the inventive concept.

The network management system 1 preferably administers the managed network elements by means of a model based object managing scheme. This means that each managed element is described by its own managed object model, which is an abstract representation of the managed element. The managed object model is thus the network management system view of the managed element. As mentioned above, a network element in the shape of a telecommunications base station comprises a system of different hardware and software functions.

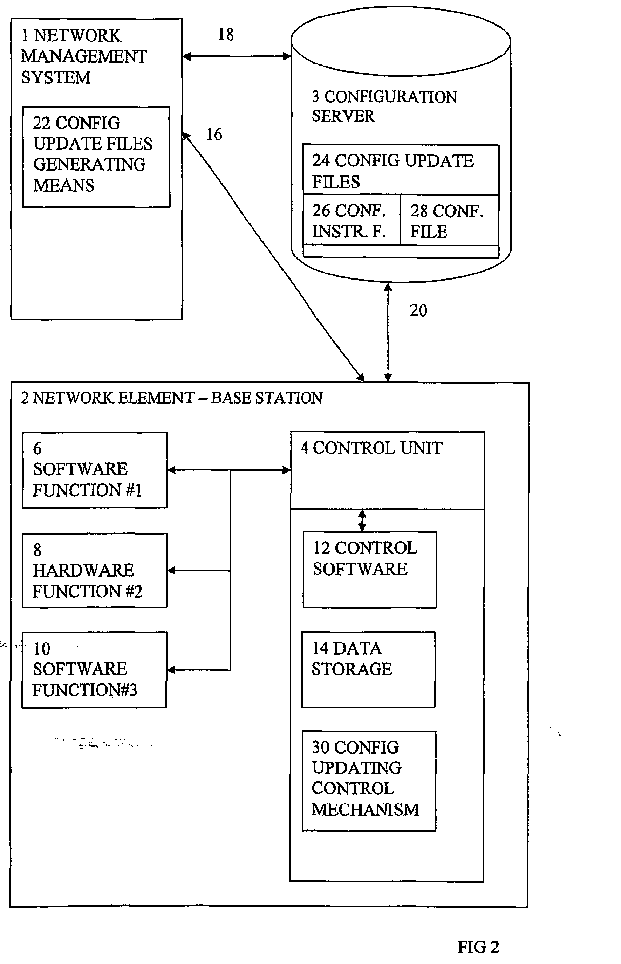

Fig 2 shows schematically a more detailed view of a managed element, here a network element base station 2 that is communicatively coupled to a network management system 1 via a communications line 16. The Network element base station 2 comprises a computer based control unit 4 which in a per se known manner comprises a data processing system with a CPU, control software 12, data storage means 14 and input/output means. The control unit is configured to supervise other functional components comprised in the base station, such as 6 software function #1, 8 hardware function #2 and 10 software function #3. Such functional components are for example software and hardware functions related to a radio transmitter and receiver, or to climate control, i.e. cooling and heating within the base station. Similarly, the network management system 1 and the configuration server 3 are computerized and each comprises a data processing system with a CPU, control software, data storage means and input/output means. For the purpose of realising the invention, the computerized units are provided with specifically designed functional system unit means and/or software comprising computer program code portions adapted to direct the respective data processing system to perform the functions and steps of the invention.

In accordance with the invention, some of the configuration functions are separated from the network management system 1 such that the specification for a configuration is defined and generated in the network management system, whereas the actual change in the configuration of the network element 2 is performed under the control of the network element 2 and in a communication between the network element 2 and a separate configuration server 3. Configuration update files comprising configuration update instruction files and configuration files are stored on the configuration server and are downloaded directly to the network element without occupying the network management system. When a configuration update has been defined in this manner, the further involvement of the network management system in the actual configuration update process is reduced to generate the update instruction and to initiate the configuration update via a command and a message with a reference to the configuration instruction file that is stored in the configuration server. The actual configuration update procedure is performed by the network element dependent on the instructions defined in the configuration update instruction file. The network management system keeps track of when the configuration update has been completed and the result of the update, i.e. if the configuration updating process has been successful or has failed. This has the effect that the degree of dependency between the network management system and the network element is reduced, and the burden of configuration related communication with the network elements is lifted from the network management system.

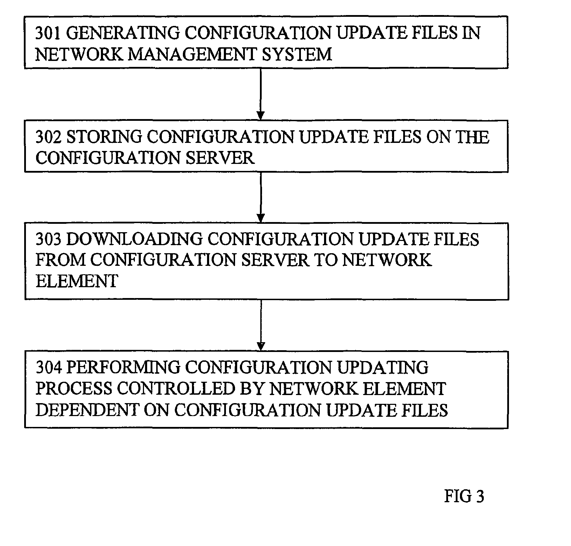

The configuration process according to an embodiment of the invention comprises the following steps and functions. Reference is here made to Fig 2 and the flow chart of Fig 3.
301. Generating configuration update files 24 in the network management system 1 by means of update configuration files generating means 22.
302. Storing the configuration update files 24 in the configuration server 3. The configuration update files 24 comprise a configuration update instruction file 26 and a configuration file 28. The configuration files 24 constitute a definition of an updated configuration for a selected network element 2, and is divided into an instruction file 26 that defines instructions and control parameters for the network element to execute to perform the updating process, whereas the configuration file 28 comprises the values and/or states of selected configuration parameters for the different components or functions of the network element 2. The configuration file 28 may in certain embodiments also comprise updated software code that the network element shall use.
303. Downloading configuration update files 24 from the configuration server 3 to the network element 2. The downloading is performed in response to a configuration update command communicated from the network management system1 to the network element 2, and is controlled by a configuration updating control function 30 comprised in the network element 2.
304. Performing a configuration updating process controlled by the configuration updating control function 30 of the network element 2 and dependent on the configuration update files 24.
   In the configuration updating process, the downloading of the configuration update files 24 is preferably divided into two separate phases as parts of the configuration updating process. In the first phase the configuration update instruction file 26 is downloaded and interpreted by the configuration updating control function 30 of the network element 2.
   In the second phase the configuration file 28 is downloaded dependent on the instructions in the configuration update instruction file 26.
   Updated configuration parameters are then set dependent on the configuration file 28 and its content. Thereafter, dependent on conditions defined in the configuration instruction file, the operation of the network element 2 and its functions and components is switched to operate dependent on the updated configuration parameters.
   Status notification messages are sent from the network element 2 to target units dependent on specifications of targets and predetermined conditions specified in the configuration update instruction file. For example, status notification messages are sent at different defined stages during the updating process, or in response to specific predicted or unpredicted events, and when the updating is completed and the network element operates according to the updated configuration.

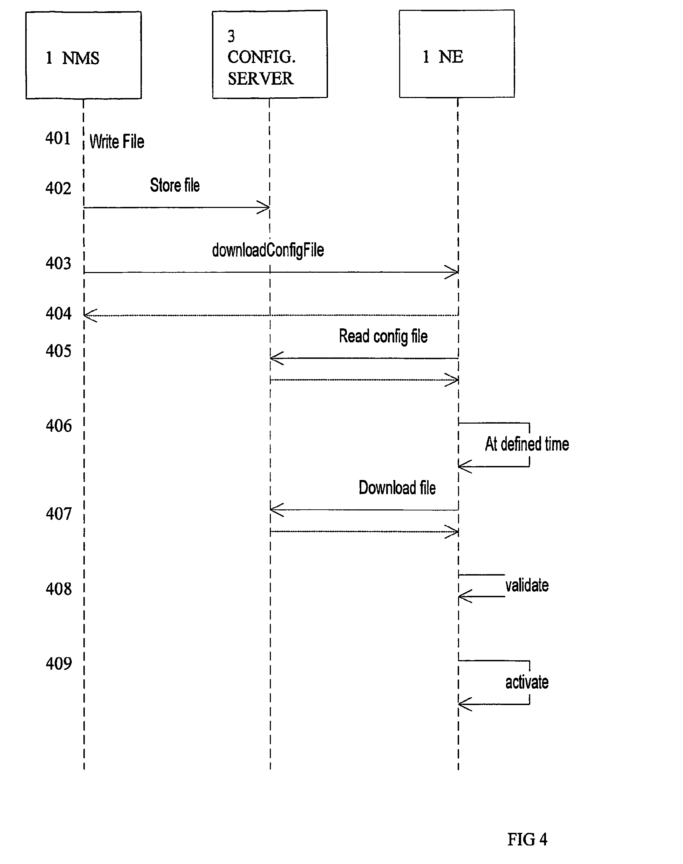

Fig 4 shows schematically a more detailed view of the configuration process in a communication chart illustrating the sequence of steps and communications between different units according to an embodiment of the invention. Reference is also made to Fig 2.
401. A user at a specifically designed interface at the network management system 2 defines a configuration update and generates (or writes) by means of specifically designed software functions a configuration update instruction file and a configuration file. The network elements that are to be updated are identified, for example individually or in groups as well as triggering conditions for performing the update. These update triggering conditions may for example be a specific point in time, a sequence or in response to a detectable event or status in the network element or elsewhere.
   The configuration update instruction file comprises instructions to the network element as to how the updating of the configuration shall be conducted. Preferably, the configuration update instruction file comprises data and the configuration updating control mechanism 30 comprises functionality that enable the performing of a BulkCM operation as defined by the above referenced 3GGP standard in order to handle a structured downloading of data in a standardized manner.
   More specifically, the configuration update instruction file comprises a selection of:
   - A globally unique file reference to the configuration file or files for the network element.
   - A download time specification comprising date and time that specifies when the configuration file shall be downloaded.
   - A validation specification that specifies if the configuration shall be validated and a time specification for when the validation shall be carried out.
   - An activation time specification specifying date and time when the configuration shall be activated.
   - An error action specification specifying steps to carry out if something errors, for example if the download procedure is unsuccessful, the configuration server is out of operation or other unpredicted events or situations.
   - A rollback specification specifying whether or not a rollback shall be performed in the case the activation of the configuration update goes wrong.
   - A configuration session log file specification that specifies a storage location and a file under which a log file of the configuration update procedure shall be stored on the configuration server.
   - A configuration update notification specification that specifies the targets to which notifications of the configuration update shall be sent in terms e.g. of network addresses or target unit names, as well as what events shall be notified e.g. download ready, validation ready etc..
   - A notification format specification that specifies the format of the configuration update notification dependent on the notification targets.

   The configuration file comprises a selection of specified values or states for a plurality of configuration parameters for the different software and hardware components comprised in the network element. The configuration file may also comprise files with updated software to install and activate in the network element.
402. The configuration update instruction file is communicated from the network management system 1 to the configuration server 3 via communications line 18 and is stored in the configuration server together with possible software files that should be downloaded to the network element that is to be updated. An identifier, e.g. a specific address or other identifying code, for the configuration update instruction file is defined and stored in the network management system.
403. An update command message to download a configuration update instruction file from the configuration server and comprising the identifier for the configuration update instruction file is communicated from the network management system 1 to the network element 2 via communications line 16. The identifier for or the reference to the configuration update instruction file is for example received in the network element in a DHCP request or in a command from the network management system.
404. The network element 2 confirms to the network management system receipt of the update command message.
405. The network element 2 retrieves, i.e. reads and downloads, the configuration update instruction file from the configuration server 3 via communications line 20 in response to the configuration update command message from the network management system. A download response message is communicated to the network element 2 from the configuration server.
406. The network element 2 interprets and prepares to execute the instructions in the configuration update instruction file.
407. The network element 2, at the defined time specified in the configuration update instruction file, downloads the configuration file or files from the configuration server 3 dependent on the instructions in the configuration updated instruction file. A download response message is communicated to the network element 2 from the configuration server.
408. The network element 2 validates, dependent on the instructions in the configuration updated instruction file, that the content of the configuration file is valid with regard to syntax, semantics and other criteria coupled to the above mentioned managed object model.
409. The network element 2 switches, in response to an internal activate command and dependent on the instructions in the configuration updated instruction file, to activate operation of the network element according to the updated (last downloaded) configuration file. The various configuration parameters for the software and hardware components of the network element are thereby set and are put to effect. The reconfiguration to the updated configuration is completed and the network element continues operation with the updated configuration.

An embodiment of the invention comprises a state machine function coupled to the configuration update procedure and designed to control a certain sequence of steps according to predetermined rules. For example, this would comprise enabling the activation step to execute only after the download step has been completed, or disabling the validation step from being executable after the activation step. The state machine function would also be used to control the sequence of steps to perform if the configuration update procedure is interrupted.

A special case of the configuration update procedure according to the invention is general updating or upgrading of software in the network element. This would follow the same procedure with adapted instruction parameters.

In the configuration management, the inventive concept follows the general requirement to configure the managed element as simple as possible. This entails that that the procedures are designed in a simple and clear fashion, i.e. transparent in their composition and function. Another requirement followed is that the data for configuring the managed element is kept to a minimum, balanced against the usually entailing tendency that the configuration turns less flexible. For traceability reasons the configuration history is also recorded in order to keep track of what has been changed and by whom.

The system architecture for configuration and the configuration session according to the invention and as exemplified above have the effect of a more efficient and flexible configuration management. An operator of the network management system can in a separate stage write instruction files for all of or for a selection of network elements that are planned for configuration update. The network management system can then notify the network elements of the configuration update any suitable amount of time ahead of the actual performance of the configuration update.

The communication between the network management system and the managed network elements with regard to configuration is thereby reduced to a minimum, the load and the occupancy of the network management system is reduced. The configuration of a whole network or a selectable size part of a network is preparable in advance before the actual update is performed. There is less dependency between the network management system and the managed network elements since the behaviour in the configuration updating process is defined in a file rather than in the events and actions of the configuration process.

## Claims

1. A method of configuration management in a telecommunications system, the telecommunications system comprising one or more of network elements (2) each having a plurality of software and/or hardware components, the network elements (2) being communicatively coupled to a network management system (1) and a configuration server (3); the method comprising:
- generating, in the network management system (2), configuration update files constituting a definition of an updated configuration for a selected network element (2) and comprising
a. a configuration update instruction file comprising instructions for the network element (2) to execute for performing the defined configuration update;
b. a configuration file defining values and/or states of selected configuration parameters for software and/or hardware components of the network element;
- storing the configuration update files on the configuration server (3);
- downloading, in response to a configuration update command from the network management system (2) to the network element (2), configuration update files from the configuration server (3) to the network element (2);
- performing a configuration updating process controlled by the network element (2) dependent on the configuration update files.

2. The method of claim 1, further comprising: downloading the configuration update instruction file from the configuration server (3) to the network element (2); interpreting and preparing execution of the instructions in the configuration update instruction file.

3. The method of the preceding claim, process further comprising: downloading the configuration file, dependent on the instructions in the configuration update instruction file, from the configuration server (3) to the network element (2); setting updated configuration parameters dependent on the configuration file; switching, dependent on conditions defined in the configuration instruction file, to operating the network element (2) dependent on the updated configuration parameters.

4. The method of claim 1, further comprising: sending status notification messages from the network element (2) to target units dependent on a notification target specification and predetermined conditions specified in the configuration update instruction file.

5. A configuration management system in a telecommunications system, the telecommunications system comprising one or more of network elements (2) each having a plurality of software and/or hardware components, the network elements (2) being communicatively coupled to a network management system (1) and a configuration server (3); the system comprising:
- means operable for generating, in the network management system (2), configuration update files constituting a definition of an updated configuration for a selected network element (2) ; and comprising;
a. means operable for generating a configuration update instruction file comprising instructions for the network element (2) to execute for performing the defined configuration update; and
b. means operable for generating a configuration file defining values and/or states of selected configuration parameters for software and/or hardware components of the network element
- means operable for storing the configuration update files on the configuration server (3);
- means operable for downloading, in response to a configuration update command from the network management system (2) to the network element (2), configuration update files from the configuration server (3) to the network element (2);
- means operable for performing a configuration updating process controlled by the network element (2) dependent on the configuration update files.

6. The system of claim 5, further comprising: means operable for downloading the configuration update instruction file from the configuration server (3) to the network element (2); means operable for interpreting and preparing execution of the instructions in the configuration update instruction file.

7. The system of the preceding claim, further comprising: means operable for downloading the configuration file, dependent on the instructions in the configuration update instruction file, from the configuration server (3) to the network element (2); means operable for setting updated configuration parameters dependent on the configuration file; means operable for switching, dependent on conditions defined in the configuration instruction file, to operating the network element (2) dependent on the updated configuration parameters.

8. The system of claim 5, further comprising: means operable for sending status notification messages from the network element (2) to target units dependent on a notification target specification and predetermined conditions specified in the configuration update instruction file.

9. A computer program product for a configuration management system in a telecommunications system, the telecommunications system comprising one or more of network elements (2) each having a plurality of software and/or hardware components, the network elements (2) being communicatively coupled to a network management system (1) and a configuration server (3); the computer program product comprising computer program code portions adapted to control a data processing system for:
- generating, in the network management system (2), configuration update files constituting a definition of an updated configuration for a selected network element (2); and comprising
a. computer program code portions adapted to control a data processing system for: generating a configuration update instruction file comprising instructions for the network element (2) to execute for performing the defined configuration update;
b. and generating a configuration file defining values and/or states of selected configuration parameters for software and/or hardware components of the network element.
- storing the configuration update files on the configuration server (3);
- downloading, in response to a configuration update command from the network management system (2) to the network element (2), configuration update files from the configuration server (3) to the network element (2);
- performing a configuration updating process controlled by the network element (2) dependent on the configuration update files.

10. The computer program product of claim 9, further comprising computer program code portions adapted to control a data processing system for: downloading the configuration update instruction file from the configuration server (3) to the network element (2); interpreting and preparing execution of the instructions in the configuration update instruction file.

11. The computer program product of the preceding claim, further comprising computer program code portions adapted to control a data processing system for: downloading the configuration file, dependent on the instructions in the configuration update instruction file, from the configuration server (3) to the network element (2); setting updated configuration parameters dependent on the configuration file; switching, dependent on conditions defined in the configuration instruction file, to operating the network element (2) dependent on the updated configuration parameters.

12. The computer program product of claim 9, further comprising computer program code portions adapted to control a data processing system for: sending status notification messages from the network element (2) to target units dependent on a notification target specification and predetermined conditions specified in the configuration update instruction file.

## Patentansprüche

1. Ein Verfahren zum Konfigurationsmanagement in einem Telekommunikationssystem, wobei das Telekommunikationssystem ein oder mehrere Netzwerkelemente (2) beinhaltet, wobei jedes eine Vielzahl von Software- und/oder Hardwarekomponenten aufweist und wobei die Netzwerkelemente (2) zur Kommunikation zu einem Netzwerkmanagementsystem (1) verbunden sind und beinhaltend einen Konfigurationsserver (3), beinhaltend folgende Verfahrensschritte:
- Erzeugen von Konfigurationsaktualisierungsanweisungsdateien in dem Netzwerkmanagementsystem (2), angebend eine Definition einer aktualisierten Konfiguration für ein ausgewähltes Netzwerkelement (2) und beinhaltend
a) eine Konfigurationsaktualisierungsanweisungsdatei, beinhaltend Anweisungen für das Netzwerkelement (2), auszuführen zur Durchführung der definierten Konfigurationsaktualisierung;
b) eine Konfigurationsdatei definierend Werte und/oder Zustände von ausgewählten Konfigurationsparametern für Software- und/oder Hardwarekomponenten des Netzwerkelements;
- Speichern der Konfigurationsaktualisierungsdateien auf dem Konfigurationsserver (3);
- Herunterladen von Konfigurationsaktualisierungsdateien von dem Konfigurationsserver (3) zum Netzwerkelement (2) in Reaktion auf ein Konfigurationsaktualisierungskommando von dem Netzwerkmanagementsystem (2) an das Netzwerkelement (2);
- Durchführen eines Konfigurationsaktualisierungsprozesses kontrolliert durch das Netzwerkelement (2), abhängig von den Konfigurationsaktualisierungsdateien.

2. Verfahren nach Anspruch 1 weiter beinhaltend:
- Herunterladen der Konfigurationsaktualisierungsanweisungsdatei von dem Konfigurationsserver (3) zum Netzwerkelement (2);
- Interpretieren und Vorbereiten der Ausführung der Anweisungen in der Konfigurationsaktualisierungsanweisungsdatei.

3. Verfahren nach einem der vorstehenden Ansprüche, wobei das Verfahren weiter beinhaltet:
- Herunterladen der Konfigurationsdatei in Abhängigkeit von den Anweisungen in der Konfigurationsaktualisierungsanweisungsdatei vom Konfigurationsserver (3) zu dem Netzwerkelement (2);
- Setzen von aktualisierten Konfigurationsparametern in Abhängigkeit der Konfigurationsdatei;
- Umschalten in Abhängigkeit von Bedingungen definiert in der Konfigurationsanweisungsdatei zum Betrieb des Netzwerkelementes (2) gemäß den aktualisierten Konfigurationsparametern.

4. Verfahren nach Anspruch 1, weiter beinhaltend:
- Senden von Zustandsmitteilungsnachrichten von dem Netzwerkelement (2) zu Zieleinheiten in Abhängigkeit von einer Mitteilungszielvorgabe und vorbestimmten Bedingungen, angegeben in der Konfigurationsaktualisierungsanweisungsdatei.

5. Ein Konfigurationsmanagementsystem in einem Telekommunikationssystem, wobei das Telekommunikationssystem ein oder mehrere Netzwerkelemente (2) beinhaltet, wobei jedes eine Vielzahl von Software- und/oder Hardwarekomponenten aufweist und wobei die Netzwerkelemente (2) zur Kommunikation zu einem Netzwerkmanagementsystem (1) verbunden sind und beinhaltend einen Konfigurationsserver (3), wobei das System beinhaltet:
- Mittel, geeignet zur Erzeugung von Konfigurationsaktualisierungsdateien im Netzwerkmanagementsystem, festlegend eine Definition einer aktualisierten Konfiguration für ein ausgewähltes Netzwerkelement (2); und beinhaltend;
a) Mittel geeignet zur Erzeugung einer Konfigurationsaktualisierungsanweisungsdatei zur Ausführung durch das Netzwerkelement (2) zur Durchführung der definierten Konfigurationsaktualisierung; und
b) Mittel geeignet zur Erzeugung einer Konfigurationsdatei definierend Werte oder Zustände ausgewählter Konfigurationsparameter für Software- und/oder Hardwarekomponenten des Netzwerkelements;
- Mittel geeignet zur Speicherung der Konfigurationsaktualisierungsdateien auf dem Konfigurationsserver (3);
- Mittel geeignet zum Herunterladen von Konfigurationsaktualisierungsdateien von dem Konfigurationsserver (3) zum Netzwerkelement (2) in Reaktion auf eine Konfigurationsaktualisierungsanweisung von dem Netzwerkmanagementsystem (2) an das Netzwerkelement (2);
- Mittel geeignet zur Durchführung eines Konfigurationsaktualisierungsvorgangs kontrolliert durch das Netzwerkelement (2) in Abhängigkeit von den Konfigurationsaktualisierungsdateien.

6. System nach Anspruch 5, weiter beinhaltend:
- Mittel geeignet zum Herunterladen der Konfigurationsaktualisierungsanweisungsdatei von dem Konfigurationsserver (3) zu dem Netzwerkelement (2);
- Mittel geeignet zur Interpretation und Vorbereitung der Ausführung der Anweisungen in der Konfigurationsaktualisierungsanweisungsdatei.

7. System nach einem der vorstehenden Ansprüche weiter beinhaltend:
- Mittel geeignet zum Herunterladen der Konfigurationsdatei in Abhängigkeit von den Anweisungen in der Konfigurationsaktualisierungsanweisungsdatei vom Konfigurationsserver (3) zum Netzwerkelement (2);
- Mittel geeignet zum Setzen von aktualisierten Konfigurationsparametern in Abhängigkeit von der Konfigurationsdatei;
- Mittel geeignet zum Umschalten in Abhängigkeit von Bedingungen definiert in der Konfigurationsanweisungsdatei zum Betrieb des Netzwerkelements (2) gemäß den aktualisierten Konfigurationsparametern.

8. Das System nach Anspruch 5, weiter beinhaltend:
- Mittel geeignet zum Senden von Zustandsmitteilungsnachrichten vom Netzwerkelement (2) an Zieleinheiten in Abhängigkeit einer Mitteilungszielvorgabe und vorbestimmten Bedingungen, angegeben in der Konfigurationsaktualisierungsanweisungsdatei. i.

9. Computerprogramme für ein Konfigurationsmanagementsystem in einem Telekommunikationssystem, wobei das Telekommunikationssystem ein oder mehrere Netzwerkelemente (2) beinhaltet, wobei jedes dieser eine Vielzahl von Software- und/oder Hardwarekomponenten beinhaltet und wobei die Netzwerkelemente (2) zur Kommunikation zu einem Netzwerkmanagementsystem (1) verbunden sind, beinhaltend einen Konfigurationsserver (3); wobei das Computerprogramm Computerprogrammcodeabschnitte beinhaltet, eingerichtet zur Kontrolle eines Datenverarbeitungssystems für:
- Erzeugen von Konfigurationsaktualisierungsdateien im Netzwerkmanagementsystem, festlegend eine Definition einer aktualisierten Konfiguration für ein ausgewähltes Netzwerkelement (2); und beinhaltend
a) Computerprogrammcodeabschnitte eingerichtet zur Kontrolle eines Datenverarbeitungssystems für:
Die Erzeugung einer Konfigurationsaktualisierungsanweisungsdatei, beinhaltend Anweisungen zur Ausführung durch das Netzwerkelement (2) zur Durchführung der definierten Konfigurationsaktualisierung;
b) und Erzeugung einer Konfigurationsdatei angebend Werte und/oder Zustände von ausgewählten Konfigurationsparametern für Software- und/oder Hardwarekomponenten des Netzwerkelementes;
- Speichern der Konfigurationsaktualisierungsdateien auf dem Konfigurationsserver (3);
- Herunterladen von Konfigurationsaktualisierungsdateien von dem Konfigurationsserver (3) auf das Netzwerkelement (2) in Reaktion auf eine Konfigurationsaktualisierungsanweisung des Netzwerkmanagementsystems (2) an das Netzwerkelement (2);
- Durchführung eines Konfigurationsaktualisierungsvorganges, kontrolliert durch das Netzwerkelement (2) in Abhängigkeit von den Konfigurationsaktualisierungsdateien.

10. Computerprogramm nach Anspruch 9 weiter beinhaltend Computerprogrammcodeabschnitte, eingerichtet zur Kontrolle eines Datenverarbeitungssystems für:
- das Herunterladen der Konfigurationsaktualisierungsanweisungsdatei von dem Konfigurationsserver (3) zu dem Netzwerkelement (2);
- Interpretieren und Vorbereiten der Ausführung der Anweisungen in der Konfigurationsaktualisierungsanweisungsdatei.

11. Computerprogramm nach einem der vorstehenden Ansprüche, weiter beinhaltend Computerprogrammcodeabschnitte eingerichtet zur Kontrolle eines Datenverarbeitungssystems für das Herunterladen der Konfigurationsdatei vom Konfigurationsserver (3) zum Netzwerkelement (2) in Abhängigkeit von Anweisungen in der Konfigurationsaktualisierungsanweisungsdatei; Setzen von aktualisierten Konfigurationsparametern in Abhängigkeit von der Konfigurationsdatei; Umschalten in Abhängigkeit von Bedingungen definiert in der Konfigurationsanweisungsdatei zum Betrieb des Netzwerkelementes (2) gemäß den aktualisierten Konfigurationsparametern.

12. Computerprogramm nach Anspruch 9, weiter beinhaltend Computerprogrammcodeabschnitte eingerichtet zur Kontrolle einer Datenverarbeitungsanlage für:
- das Senden von Statusmitteilungsnachrichten von dem Netzwerkelement (2) zu Zieleinheiten in Abhängigkeit von einer Mitteilungszielvorgabe und vordefinierten Bedingungen angegeben in der Konfigurationsaktualisierungsanweisungsdatei.

## Revendications

1. Procédé de gestion de configuration dans un système de télécommunications, le système de télécommunications comprenant un ou plusieurs éléments de réseau (2) possédant chacun une pluralité de composants logiciels et/ou matériels, les éléments de réseau (2) étant couplés communicativement avec un système de gestion du réseau (1) et un serveur de configuration (3), le procédé comprenant les étapes consistant à :
- produire, sur le système de gestion du réseau (2), des fichiers de mise à jour de configuration constituant une définition d'une configuration mise à jour pour un élément de réseau (2) sélectionné et comprenant :
a. un fichier d'instructions de mise à jour de configuration, comprenant des instructions destinées à l'élément de réseau (2) afin qu'il exécute la mise à jour de configuration définie ;
b. un fichier de configuration définissant des valeurs et/ou des états de paramètres de configuration sélectionnés pour des composants logiciels et/ou matériels de l'élément de réseau ;
- stocker les fichiers de mise à jour de configuration sur le serveur de configuration (3) ;
- télécharger, en réponse à une instruction de mise à jour de configuration envoyée par le système de gestion du réseau (2) à l'élément de réseau (2), des fichiers de mise à jour de configuration entre le serveur de configuration (3) et l'élément de réseau (2) ;
- effectuer un processus de mise à jour de configuration, commandé par l'élément de réseau (2) en fonction des fichiers de mise à jour de configuration.

2. Procédé selon la revendication 1, comprenant en outre les étapes consistant à :
télécharger le fichier d'instructions de mise à jour de configuration entre le serveur de configuration (3) et l'élément de réseau (2) ;
interpréter et préparer l'exécution des instructions se trouvant dans le fichier d'instructions de mise à jour de configuration.

3. Procédé selon la revendication précédente, comprenant en outre les étapes consistant à :
télécharger le fichier de configuration, en fonction des instructions se trouvant dans le fichier d'instructions de mise à jour de configuration, entre le serveur de configuration (3) et l'élément de réseau (2) ;
renseigner des paramètres de configuration mis à jour en fonction du fichier de configuration ;
sur la base de conditions définies dans le fichier d'instructions de configuration, basculer le fonctionnement de l'élément de réseau (2) sur les paramètres de configuration mis à jour.

4. Procédé selon la revendication 1, comprenant en outre l'étape consistant à : envoyer des messages de notification d'état entre l'élément de réseau (2) et des unités de destination sur la base d'une spécification de destinations de notifications et de conditions prédéterminées, spécifiées dans le fichier d'instructions de mise à jour de configuration.

5. Système de gestion de configuration dans un système de télécommunications, le système de télécommunications comprenant un ou plusieurs éléments de réseau (2) possédant chacun une pluralité de composants logiciels et/ou matériels, les éléments de réseau (2) étant couplés communicativement avec un système de gestion du réseau (1) et un serveur de configuration (3), le système comprenant :
- un moyen en mesure de produire, sur le système de gestion du réseau (2), des fichiers de mise à jour de configuration constituant une définition d'une configuration mise à jour pour un élément de réseau (2) sélectionné et comprenant :
a. un moyen en mesure de produire un fichier d'instructions de mise à jour de configuration comprenant des instructions destinées à l'élément de réseau (2) afin qu'il exécute la mise à jour de configuration définie ;
b. un moyen en mesure de produire un fichier de configuration définissant des valeurs et/ou des états de paramètres de configuration sélectionnés pour des composants logiciels et/ou matériels de l'élément de réseau ;
- un moyen en mesure de stocker les fichiers de mise à jour de configuration sur le serveur de configuration (3) ;
- un moyen en mesure de télécharger, en réponse à une instruction de mise à jour de configuration envoyée par le système de gestion du réseau (2) à l'élément de réseau (2), des fichiers de mise à jour de configuration entre le serveur de configuration (3) et l'élément de réseau (2) ;
- un moyen en mesure d'effectuer un processus de mise à jour de configuration commandé par l'élément de réseau (2) en fonction des fichiers de mise à jour de configuration.

6. Système selon la revendication 5, comprenant en outre :
un moyen en mesure de télécharger le fichier d'instructions de mise à jour de configuration entre le serveur de configuration (3) et l'élément de réseau (2) ;
un moyen en mesure d'interpréter et préparer l'exécution des instructions se trouvant dans le fichier d'instructions de mise à jour de configuration.

7. Système selon la revendication précédente, comprenant en outre :
un moyen en mesure de télécharger le fichier de configuration, en fonction des instructions se trouvant dans le fichier d'instructions de mise à jour de configuration, entre le serveur de configuration (3) et l'élément de réseau (2) ;
un moyen en mesure de renseigner des paramètres de configuration mis à jour en fonction du fichier de configuration ;
un moyen en mesure de basculer, sur la base de conditions définies dans le fichier d'instructions de configuration, le fonctionnement de l'élément de réseau (2) sur les paramètres de configuration mis à jour.

8. Système selon la revendication 5, comprenant en outre :
un moyen en mesure d'envoyer des messages de notification d'état entre l'élément de réseau (2) et des unités de destination sur la base d'une spécification de destinations de notifications et de conditions prédéterminées, spécifiées dans le fichier d'instructions de mise à jour de configuration.

9. Progiciel d'ordinateur pour un système de gestion de configuration dans un système de télécommunications, le système de télécommunications comprenant un ou plusieurs éléments de réseau (2) possédant chacun une pluralité de composants logiciels et/ou matériels, les éléments de réseau (2) étant couplés communicativement avec un système de gestion du réseau (1) et un serveur de configuration (3), le progiciel d'ordinateur comprenant des parties de code de programme d'ordinateur conçues pour commander un système de traitement de données afin de :
- produire, sur le système de gestion du réseau (2), des fichiers de mise à jour de configuration constituant une définition d'une configuration mise à jour pour un élément de réseau (2) sélectionné ; et comprenant :
a. des parties de code de programme d'ordinateur conçues pour commander un système de traitement de données afin de : produire un fichier d'instructions de mise à jour de configuration, comprenant des instructions destinées à l'élément de réseau (2) afin qu'il exécute la mise à jour de configuration définie ;
b. et produire un fichier de configuration définissant des valeurs et/ou des états de paramètres de configuration sélectionnés pour des composants logiciels et/ou matériels de l'élément de réseau ;
- stocker les fichiers de mise à jour de configuration sur le serveur de configuration (3) ;
- télécharger, en réponse à une instruction de mise à jour de configuration envoyée par le système de gestion du réseau (2) à l'élément de réseau (2), des fichiers de mise à jour de configuration entre le serveur de configuration (3) et l'élément de réseau (2) ;
- effectuer un processus de mise à jour de configuration commandé par l'élément de réseau (2) en fonction des fichiers de mise à jour de configuration.

10. Progiciel d'ordinateur selon la revendication 9, comprenant en outre des parties de code de programme d'ordinateur conçues pour commander un système de traitement de données afin de :
télécharger le fichier d'instructions de mise à jour de configuration entre le serveur de configuration (3) et l'élément de réseau (2) ;
interpréter et préparer l'exécution des instructions se trouvant dans le fichier d'instructions de mise à jour de configuration.

11. Progiciel d'ordinateur selon la revendication précédente, comprenant en outre des parties de code de programme d'ordinateur conçues pour commander un système de traitement de données afin de :
télécharger le fichier de configuration, en fonction des instructions se trouvant dans le fichier d'instructions de mise à jour de configuration, entre le serveur de configuration (3) et l'élément de réseau (2) ;
renseigner des paramètres de configuration mis à jour en fonction du fichier de configuration ;
sur la base de conditions définies dans le fichier d'instructions de configuration, basculer le fonctionnement de l'élément de réseau (2) sur les paramètres de configuration mis à jour.

12. Progiciel d'ordinateur selon la revendication 9, comprenant en outre des parties de code de programme d'ordinateur conçues pour commander un système de traitement de données afin de : envoyer des messages de notification d'état entre l'élément de réseau (2) et des unités de destination sur la base d'une spécification de destinations de notifications et de conditions prédéterminées, spécifiées dans le fichier d'instructions de mise à jour de configuration.
